# EUROPÄISCHE PATENTSCHRIFT

(11) **EP 3 165 071 B1**
(45) Veröffentlichungstag und Bekanntmachung des Hinweises auf die Patenterteilung: **20.06.2018**
(21) Anmeldenummer: 16401088.6
(22) Anmeldetag: 02.11.2016
(51) Int. Cl.: A01C 17/00, A01C 21/00

(54) **VERFAHREN ZUM AUSBRINGEN VON DÜNGER MIT EINEM SCHLEUDERSTREUER**
METHOD FOR DISTRIBUTING FERTILIZER WITH A CENTRIFUGAL SPREADER
PROCÉDÉ D'ÉPANDAGE D'ENGRAIS À L'AIDE D'UN ÉPANDEUR CENTRIFUGE

(30) Priorität: 06.11.2015 DE 102015119118
(43) Veröffentlichungstag der Anmeldung: 10.05.2017
(73) Patentinhaber: Amazonen-Werke H. Dreyer GmbH & Co. KG, 49205 Hasbergen (DE)
(72) Erfinder: Dreyer, Justus, 49076 Osnabrück (DE); Johannaber, Stefan Jan, 49536 Lienen (DE); Kleine-Hartlage, Hubertus, 49186 Bad Iburg (DE); Rahe, Florian, 49504 Lotte (DE)

(56) Entgegenhaltungen:
- DE-A1- 19 835 487
- DE-A1-102012 016 574
- DE-A1-102014 103 968

## Beschreibung

Die Erfindung betrifft ein Verfahren zum Ausbringen von Dünger mit einem Schleuderstreuer gemäß Oberbegriff des Anspruchs 1, wie bekannt aus der DE 10 2014 103 968 A1, und einen Schleuderstreuer.

Wie beispielsweise aus der EP 1 692 929 A1 bekannt ist, werden für den normalen Düngeraustrag mit einem Schleuderstreuer Feldfahrgassen im Feldinneren abstandsgleich angelegt. Die Fahrgassen sind an ihren Enden durch ein Vorgewende miteinander verbunden. Im Feldinneren wird mit einem Normalstreubild vorgegebener Arbeitsbreite entsprechend dem regelmäßigen Abstand zwischen den Feldfahrgassen gearbeitet.

Ferner werden am Rand des zu bearbeitende Feld Grenzfahrgasen angelegt, die beispielsweise zu Beginn des Düngeraustrags abgefahren werden. Beim Befahren von Grenzfahrgassen, die vorzugsweise auch um das Vorgewende herum verlaufen, wird mit einem Grenzstreubild gearbeitet, das nur auf seiner der jeweiligen Feldgrenze zugewandten äußeren Seite eine steil abfallende Streuflanke aufweist, so dass möglichst wenig Dünger über die Feldgrenze hinaus gestreut wird. Zum Feldinneren hin wird dagegen mit einer Streuflanke des Normalstreubilds gearbeitet.

Gemäß EP 1 692 929 A1 kann ein solches asymmetrisches Streubild auch beim Befahren des Vorgewendes verwendet werden. Zusätzlich werden dort Ein- und Ausschaltzeitpunkte für Dosierungsorgane am Schleuderstreuer beim Wenden zugunsten einer gleichmäßigen Düngerverteilung optimiert.

Die EP 2 417 848 A2 offenbart ferner eine gezielte Anpassung des Streubilds beim Befahren von Grenzfahrgassen und daran gegebenenfalls keilförmig anschließender Fahrgassen ausschließlich in den jeweils der Feldgrenze zugewandten Streuflanken.

Die DE 10 2014 103 968 A1 offenbart ferner ein Verfahren zur gleichmäßigen Verteilung von Dünger auf einem Feld mittels Schleuderscheiben, wobei das Streugut beim Anschlussfahren in parallelen Feldfahrgassen in sich überlappenden Streufächern zumindest annähernd gleichmäßig im Feldinneren verteilt wird. Die Feldfahrgassen gehen im Bereich der Feldgrenze in Vorgewende-Fahrgassen über, die zudem Bestandteile einer umlaufenden Grenzfahrgasse sind. Feldfahrgassen und Grenzfahrgasse laufen hierbei teilweise keilförmig aufeinander zu. Beim Durchfahren der Grenzfahrgasse werden zum Feldinneren hin die Streumenge und/oder die Streubreite des Düngers verändert. Durch diese Veränderung ist es möglich, ein an die Verteilungscharakteristik aus den Feldfahrgassen heraus angepasstes Streubild, beispielsweise in Form eines treppenförmig abgestuften Streubildes, zu erzeugen und somit unnötige, zu schädlichen Überdosierungen führende Mehrfachüberlappungen der Streufächer zu vermeiden.

Problematisch ist, dass es trotz derartiger Maßnahmen beim Befahren von Keilfahrgassen und Parallelfahrgassen, die in einem kleineren Abstand als die vorgegebene Arbeitsbreite an einer Grenzfahrgasse entlang laufen, zu einem ungleichmäßigen Düngeraustrag kommt. Entweder entstehen Bereiche von Unterdüngung im Grenzbereich zwischen Keil- / bzw. Parallelfahrgasse und Grenzfahrgasse, oder es wird zu viel Dünger über die Feldgrenze hinaus geworfen.

Es besteht daher der Bedarf für einen möglichst gleichmäßigen Austrag von Dünger im Überlappungsbereich von Grenzfahrgassen und daran entlang laufender Anschlussfahrgassen, die keilförmig oder parallel verlaufend den Anschluss zu inneren Feldfahrgassen herstellen.

Die gestellte Aufgabe wird mit einem Verfahren gemäß Anspruch 1 gelöst. Demnach dient dieses zum Ausbringen von Dünger mit einem Schleuderstreuer, wobei beim normalen Befahren von Feldfahrgassen im Feldinneren mit einem Normalstreubild einer vorgegebenen Arbeitsbreite, beim Befahren einer Grenzfahrgasse mit einem Grenzstreubild und beim Befahren einer dazwischen liegenden und an der Grenzfahrgasse entlang laufenden Anschluss-Fahrgasse mit einem Anschluss-Streubild gearbeitet wird. Dabei arbeitet man beim Befahren der Grenzfahrgasse mit einer das Anschluss-Streubild überlappenden inneren Grenzstreuflanke, deren innere Teilarbeitsbreite und/oder relative Querverteilung vom Normalstreubild abweicht.

Dadurch kann der Düngeraustrag in einem Überlappungsbereich mit der Anschluss-Fahrgasse an den Abstand zwischen Grenzfahrgasse und Anschluss-Fahrgasse angepasst werden, insbesondere unabhängig von einer der Feldgrenze zugewandten äußeren Grenzstreuflanke des Grenzstreubilds. Unterdüngung im Überlappungsbereich und Düngeraustrag über die Feldgrenze hinaus lassen sich so gezielt reduzieren oder gar ganz vermeiden.

Per Definition sind äußere Streuflanken der nächsten seitlichen Feldgrenze zugewandt und innere Streuflanken dem Feldinneren.

Vorzugsweise wird mit einem Zweischeibenstreuer mit im Abwurfbereich voneinander weg drehenden Streuscheiben gearbeitet. Unter unterschiedlichen Querverteilungen sind qualitativ unterschiedliche Verläufe der Streumenge quer zur Fahrtrichtung zu verstehen, im Gegensatz zu einer vertikalen Spreizung oder Stauchung von Streubildern durch Änderung der Streumenge.

Vorzugsweise wird bei einem Abstand zwischen Grenzfahrgasse und Anschluss-Fahrgasse gearbeitet, der kleiner ist als die vorgegebene Arbeitsbreite. Die innere Grenzstreuflanke lässt sich dann durch Reduzierung der inneren Teilarbeitsbreite ausgehend von der vorgegebenen Arbeitsbreite einstellen.

Vorzugsweise werden die Teilarbeitsbreiten einander überlappender Streuflanken des Grenzstreubilds und des Anschluss-Streubilds in Abhängigkeit von einem Abstand zwischen Grenzfahrgasse und Anschluss-Fahrgasse gegenüber dem Normalstreubild reduziert. Dadurch wird die Arbeitsbreite dazwischen gegebenenfalls dynamisch und asymmetrisch an den Ist-Abstand zwischen Grenzfahrgasse und Anschluss-Fahrgasse angepasst, um Unterdüngung an der inneren Grenzstreuflanke und Überdüngung an der äußeren Grenzstreuflanke zu vermeiden.

Vorzugsweise weichen Werte der relativen Streumenge in der Querverteilung an einem Schnittpunkt der inneren Grenzstreuflanke mit der äußeren Anschluss-Streuflanke in der Summe von Maximalwerten der relativen Streumengen RSM des Grenzstreubilds und des Anschluss-Streubilds um nicht mehr als 20%, insbesondere um nicht mehr als 10%, ab.

Vorzugsweise weicht die Teilarbeitsbreite der inneren Grenzstreuflanke vom Abstand zwischen Grenzfahrgasse und Anschluss-Fahrgasse um nicht mehr als 10% ab. Vorzugsweise weicht dann auch die Teilarbeitsbreite der äußeren Anschluss-Streuflanke vom Abstand zwischen Grenzfahrgasse und Anschluss-Fahrgasse um nicht mehr als 10% ab.

In Ausnahmefällen kann die Teilarbeitsbreite der inneren Grenzstreuflanke jedoch auch größer sein, wobei die korrespondierende Teilarbeitsbreite der Anschluss-Streuflanke dann entsprechend reduziert wird.

Vorzugsweise weicht die Teilarbeitsbreite der inneren Grenzstreuflanke vom Abstand zwischen Grenzfahrgasse und Anschluss-Fahrgasse um nicht mehr als 10% ab. Dadurch lässt sich ein gleichmäßiger Düngeraustrag im Überlappungsbereich von Grenzfahrgasse und Anschluss-Fahrgasse bewerkstelligen.

Erfindungsgemäß wird eine Streuflanke des Normalstreubilds zum Erzeugen der inneren Grenzstreuflanke trapezförmig verzerrt. Darunter ist zu verstehen, dass eine im Wesentlichen dreieckige oder nur schwach trapezförmige Querverteilung des Düngers im Normalstreubild für das Grenzfahren in der inneren Grenzstreuflanke zugunsten einer trapezförmigeren Querverteilung umverteilt wird. Dadurch kann ein vergleichsweise scharf abgegrenzter Feldstreifen innerhalb der Grenzfahrgasse ausreichend mit Dünger versorgt werden, so dass in diesem Feldstreifen weniger Düngeraustrag beim Befahren der Anschluss-Fahrgasse erforderlich ist.

Das Normalstreubild hat zugunsten einer gleichmäßigen und stabilen Düngerverteilung beim normalen Anschlussfahren im Feldinneren meist eine im Wesentlichen dreieckige Querverteilung.

Vorzugsweise wird die innere Grenzstreuflanke bei der Grenzfahrt laufend an den Abstand zwischen der dabei befahrenen Grenzfahrgasse und der benachbarten Anschluss-Fahrgasse angepasst, wobei letztere insbesondere in Form einer Keilfahrspur entlang der Grenzfahrgasse verläuft. Die Keilfahrspur schließt dann mit der Grenzfahrgasse insbesondere einen Winkel von höchstens 45° ein. Die Anschluss-Fahrgasse kann aber zumindest in einem Abschnitt als Parallelfahrspur entlang der Grenzfahrspur verlaufen. Ebenso kann die die innere Grenzstreuflanke laufend an die diesbezügliche Richtung der Anschluss-Fahrgasse angepasst werden.

Dazu eignen sich beispielsweise eine insbesondere laufende Variation der Teilarbeitsbreite der inneren Grenzstreuflanke und der äußeren Anschluss-Streuflanke. Zusätzlich ist eine entsprechende Variation der Düngerdosierung möglich. Folglich lässt sich auf der Innenseite der Grenzfahrgasse ein dynamisch optimierter Überlappungsbereich mit der Anschluss-Fahrgasse herstellen. Erfindungsgemäß ist neben Anschluss-Fahrgassen eine trapezförmige Querverteilung in der inneren Grenzstreuflanke vorteilhaft. Es wird dann beispielsweise im seitlichen Abstand von 50% der Arbeitsbreite definierte Streumenge ausgehend von einer Streuflanke des Normalstreubilds in der inneren Grenzstreuflanke erhöht, insbesondere um wenigstens 20%. Dies führt zu einer effektiven trapezförmigen Streuflanke, insbesondere bei einer Erhöhung um wenigstens 50%.

Gemäß einem ersten vorteilhaften Teilaspekt wird ein Aufgabepunkt für den Dünger auf einer für die innere Grenzstreuflanke verwendeten Streuscheibe ausgehend vom normalen Befahren der Feldfahrgassen entgegen der Drehrichtung der Streuscheibe zum Erzeugen der inneren Grenzstreuflanke verstellt. Dies ermöglicht eine besonders effektive Anpassung des Normalstreubilds an die aktuell zu bearbeitende Arbeitsbreite zwischen Grenzfahrspur und Anschlussfahrgasse. Dies gilt in dem Fall, dass der Abstand zwischen Grenzfahrgasse und Anschluss-Fahrgasse kleiner ist als die vorgegebene Arbeitsbreite. Im eher seltenen Falle eines größeren Abstands als der vorgegebenen Arbeitsbreite ist mit einer Verstellung des Aufgabepunktes in Drehrichtung der Streuscheibe zu arbeiten.

Der Aufgabepunkt ist beispielsweise als geometrischer Schwerpunkt einer Dosierungsöffnung zu verstehen, durch die der Dünger eingeleitet wird und auf die Streuscheibe fällt. Die Dosierungsöffnung ist Bestandteil eines Einleitsystems, das um die Drehachse der Streuscheibe gesteuert geschwenkt werden kann.

Gemäß einem zweiten vorteilhaften Teilaspekt wird die Drehzahl einer für die innere Grenzstreuflanke verwendeten Streuscheibe ausgehend vom normalen Befahren der Feldfahrgassen zum Erzeugen der inneren Grenzstreuflanke reduziert.

Gemäß einem dritten vorteilhaften Teilaspekt wird die Dosierung des Düngers an einer für die innere Grenzstreuflanke verwendeten Streuscheibe ausgehend vom normalen Befahren der Feldfahrgassen zum Erzeugen der inneren Grenzstreuflanke reduziert. Dies ist insbesondere in Verbindung mit einem Verstellen des Aufgabepunkts besonders effektiv.

Gemäß einem vierten vorteilhaften Teilaspekt wird wenigstens eine Streuschaufel an einer für die innere Grenzstreuflanke verwendeten Streuscheibe ausgehend vom normalen Befahren der Feldfahrgassen zum Erzeugen der inneren Grenzstreuflanke verstellt oder selektiv zugeschaltet. Beispielsweise kann der Anstellwinkel einer Streuschaufel gesteuert verstellt werden. Ebenso kann eine gesteuert schaltbare Weiche vorhanden sein, die den Dünger zum Erzeugen der inneren Grenzstreuflanke auf eine bestimmte Streuschaufel lenkt und diese dadurch zuschaltet.

Vorzugsweise wird das Grenzstreubild automatisch mittels GPS-Steuerung aktiviert und/oder eingestellt. Mithilfe zuvor abgelegter Ortsdaten des zu bearbeitenden Felds und der anhand GPS-Daten ermittelten Fahrtrichtung ist eine besonders exakte und reproduzierbare Anpassung des Grenzstreubilds möglich. Beispielsweise wird der Abstand zwischen Grenzfahrgasse und Anschluss-Fahrgasse laufend mittels GPS-Daten ermittelt und das innere Grenzstreubild und oder ein korrespondierendes Anschluss-Streubild auf dieser Grundlage eingestellt.

Die oben beschriebenen Aspekte des Verfahrens lassen sich in gleicher Weise zum Einstellen der äußeren Anschluss-Streuflanke anwenden.

Die gestellte Aufgabe wird ebenso mit einem Schleuderstreuer für Dünger gemäß Anspruch 12 gelöst. Der Schleuderstreuer umfasst mit zwei mittels eines Bordcomputers getrennt einstellbaren Schleuderscheibeneinheiten, und ein GPS-System, wobei mittels des Bordcomputers wenigstens ein erster Betriebszustand zum Erzeugen eines Normalstreubilds für normales Befahren innerer Feldfahrgassen, ein zweiter Betriebszustand zum Erzeugen eines Grenzstreubilds für das Befahren einer Grenzfahrgasse und ein dritter Betriebszustand zum Erzeugen eines Anschluss-Streubilds für das Befahren einer der Grenzfahrgasse benachbarten Anschluss-Fahrgasse aktiviert werden können. Ferner ist der Bordcomputer dazu ausgebildet, anhand empfangener GPS-Daten das Grenzstreubild durch Ansteuern einer dabei dem Feldinneren zugewandten Schleuderscheibeneinheit, und insbesondere ferner das Anschluss-Streubild durch Ansteuern einer dabei der Feldgrenze zugewandten Schleuderscheibeneinheit, gemäß dem Verfahren nach wenigstens einer der vorigen Ausführungsformen einzustellen.

Die Schleuderscheibeneinheiten umfassen jeweils separat ansteuerbare Schleuderscheiben und Einleitsysteme mit Dosierungsorganen.

Vorzugsweise umfassen die Schleuderscheibeneinheiten Einleitsysteme, die sich vom Bordcomputer gemäß dem ersten vorteilhaften Teilaspekt ansteuern lassen.

Vorzugsweise umfassen die Schleuderscheibeneinheiten Schleuderscheiben, deren Antriebseinheit sich vom Bordcomputer gemäß dem zweiten vorteilhaften Teilaspekt ansteuern lässt.

Vorzugsweise umfassen die Schleuderscheibeneinheiten Dosierungsorgane für den Dünger, die sich vom Bordcomputer gemäß dem dritten vorteilhaften Teilaspekt ansteuern lassen.

Vorzugsweise sind an den Schleuderscheiben Schleuderschaufeln ausgebildet, die sich vom Bordcomputer gemäß dem vierten vorteilhaften Teilaspekt ansteuern lassen.

Bevorzugte Ausführungsformen sind in den Zeichnungen dargestellt. Es zeigen:
- Fig. 1: eine schematische Draufsicht auf ein Feld mit einem Schleuderstreuer;
- Fig. 2: eine schematische Draufsicht auf einen Schleuderstreuer;
- Fig. 3A und 3B: Querverteilungen von Streubildern im Vergleich;
- Fig. 4: eine schematische Draufsicht auf Anschluss- und Grenzfahrspuren; und
- Fig. 5: ein erfindungsgemäß trapezförmig verzerrtes Streubild im Vergleich mit dem Normalstreubild.

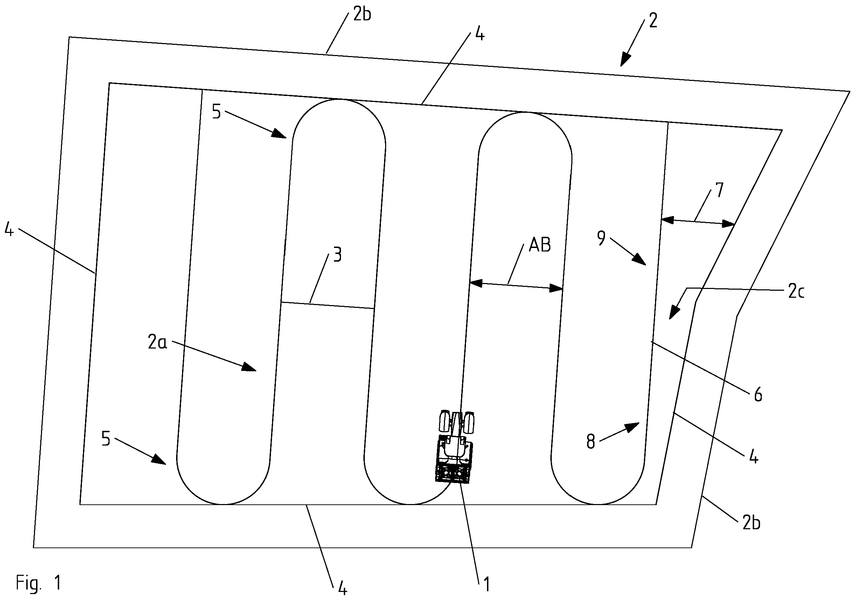

Wie die Fig. 1 erkennen lässt, sind auf einem mit einem Schleuderstreuer 1 zu bearbeitenden Feld 2 in bekannter Weise innere Feldfahrgassen 3 im Feldinneren 2a, eine äußere Grenzfahrgasse 4 entlang der Feldgrenze 2b, zwei Vorgewende 5 und eine seitliche Anschluss-Fahrgasse 6 in einem Randbereich 2c des Felds 2 entlang der Grenzfahrgasse 4 angelegt.

Die Feldfahrgassen 3 sind mit einem einheitlichen Abstand zueinander angelegt, der einer für das normale Befahren der Feldfahrgassen 3 vorgegebenen Arbeitsbreite AB entspricht. Der Abstand 7 zwischen der Grenzfahrgasse 4 und der Anschluss-Fahrgasse 6 ist kleiner als die Arbeitsbreite AB und kann entlang eines als Parallelfahrspur 8 ausgebildeten Abschnitts der Anschluss-Fahrgasse 6 konstant sein und/oder entlang eines als Keilfahrspur 9 ausgebildeten Abschnitts der Anschluss-Fahrgasse 6 variieren.

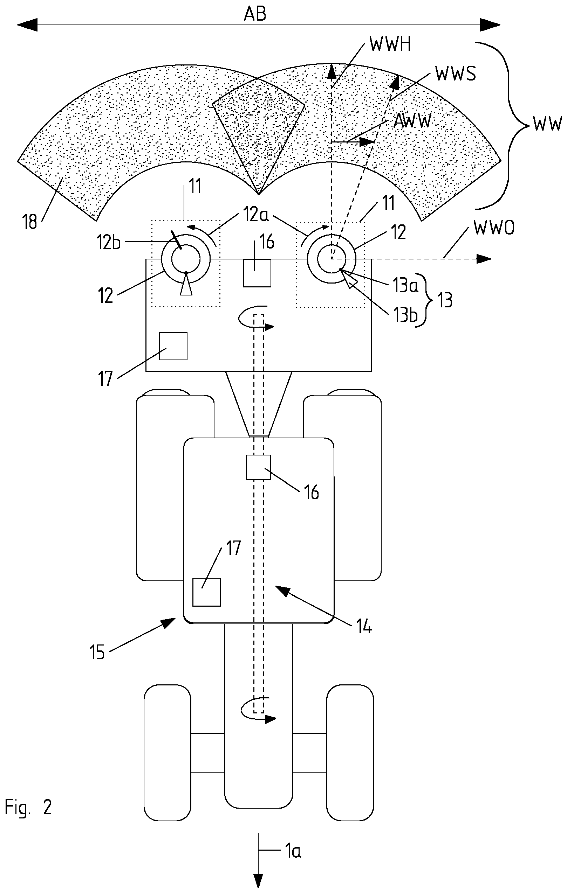

Wie die Fig. 2 erkennen lässt, ist der Schleuderstreuer 1 als Zweischeibenstreuer ausgebildet umfassend zwei separat ansteuerbare Streuscheibeneinheiten 11. Diese umfassen jeweils schematisch angedeutete Streuscheiben 12, sich die mit einer Drehzahl 12a in schematisch angedeuteter Richtung drehen, sowie Einleitsysteme 13 für Dünger mit schematisch angedeuteten Aufgabepunkten 13a auf die Streuscheiben 12 und Dosierungsorganen 13b.

Auf den Streuscheiben 12 sind Streuschaufeln 12b ausgebildet, die beispielsweise auf bekannte Weise hinsichtlich ihres Anstellwinkels verstellbar befestigt sind. Ebenso können die Streuschaufeln 12b Weichen (nicht dargestellt) umfassen, die den Dünger wahlweise zu unterschiedlich langen und/oder ausgerichteten äußeren Abschnitten der Streuschaufeln 12b lenken. Der Übersichtlichkeit halber ist nur eine einzige Streuschaufel 12b stark schematisiert angedeutet.

Die Aufgabepunkte 13a können in/entgegen der Drehrichtung der Streuscheiben 12 individuell verstellt werden, ebenso die mittels der Dosierungsorgane 13b jeweils eingeleitete Menge des Düngers. Die Drehzahlen 12a werden vorzugsweise für beide Streuscheibeneinheiten 11 gemeinsam an einer mechanischen oder hydraulischen Antriebseinheit 14 eingestellt, beispielsweise an einem zugeordneten Schlepper 15.

Der Schleuderstreuer 1 und/oder der Schlepper 15 umfassen ferner wenigstens ein GPS-System 16 und wenigstens einen Bordcomputer 17 oder dergleichen Steuereinheit zum individuellen Ansteuern der Streuscheibeneinheiten 11.

Für das Arbeiten entlang der Feldfahrgassen 3 wird mittels der Streuscheiben 12 ein bezüglich der Fahrtrichtung 1a symmetrischer Normalstreufächer 18 hinter dem Schleuderstreuer 1 erzeugt. Der Normalstreufächer 18 kann anhand der vorgegebenen Arbeitsbreite AB und einer geeigneten Wurfweite WW charakterisiert werden, beispielsweise anhand einer der Fahrtrichtung 1a entgegengesetzten hinteren Wurfweite WWH, einer unter einem geeigneten Abwurfwinkel AWW definierten seitlichen Wurfweite WWS, einer seitlich orthogonal zur Fahrtrichtung 1a definierten orthogonalen Wurfweite WWO und/oder anhand anderweitiger zur Charakterisierung von Streufächern und Streubildern gebräuchlicher Parameter.

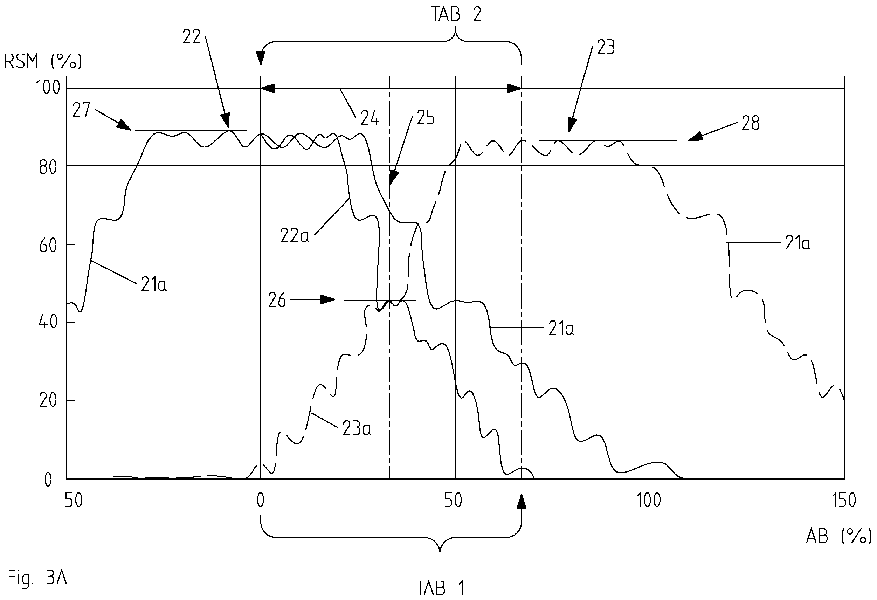

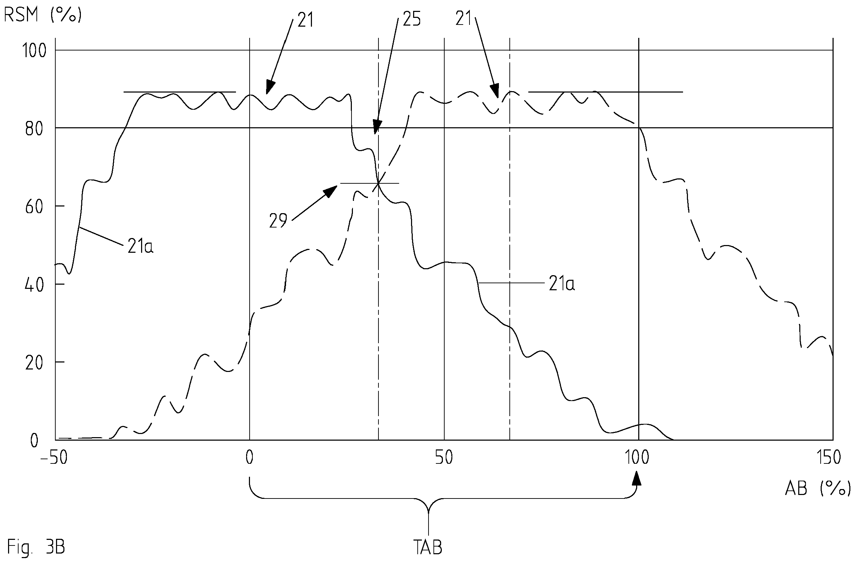

Wie die Figuren 3A und 3B erkennen lassen, resultiert aus dem Befahren einer einzelnen Feldfahrgasse 3 mit dem Normalstreufächer 18 ein bezüglich der Feldfahrgasse 3 ebenfalls achsensymmetrisches Normalstreubild 21 mit einer vorzugsweise annähernd dreieckigen Querverteilung des Düngers bezogen auf die vorgegebene Arbeitsbreite AB. Das Normalstreubild 21 setzt sich aus zwei identischen Streuflanken 21a zusammen, von denen nur eine vollständig dargestellt ist. Die (nicht dargestellte) Längsverteilung des Düngers entlang der Feldfahrgassen 3 ist im Feldinneren 2a im Wesentlichen konstant.

In der Fig. 3A ist ferner eine beim Befahren der Grenzgasse 4 dem Feldinneren 2a zugewandte innere Grenzstreuflanke 22a eines Grenzstreubilds 22 dargestellt. Die Grenzstreuflanke 22a ist gegenüber der entsprechenden Streuflanke 21a des Normalstreubilds 21 in horizontaler Richtung um etwa 35% gestaucht, so dass die relative Streumenge RSM gegenüber dem Normalstreubild 21 bereits bei etwa 65% der vorgegebenen Arbeitsbreite AB auf einen entsprechenden Wert abfällt. Aus dem Stauchen der Streuflanke 21a resultiert eine entsprechend reduzierte Teilarbeitsbreite TAB1 des Grenzstreubilds 22.

In der Fig. 3A ist ferner eine beim Befahren der Anschluss-Fahrgasse 6 der Feldgrenze 2b zugewandte äußere Anschluss-Streuflanke 23a eines Anschluss-Streubilds 23 dargestellt. Auch die Anschluss-Streuflanke 23a ist gegenüber der entsprechenden Streuflanke 21a des Normalstreubilds 21 in horizontaler Richtung um etwa 35% gestaucht, so dass die relative Streumenge RSM gegenüber dem Normalstreubild 21 bereits bei etwa 65% der vorgegebenen Arbeitsbreite AB auf einen entsprechenden Wert abfällt. Aus dem Stauchen der Streuflanke 21a resultiert eine entsprechend reduzierte Teilarbeitsbreite TAB2 des Anschluss-Streubilds 23.

Beim Stauchen der Streuflanke 21a des Normalstreubilds 21 zur inneren Grenzstreuflanke 22a und/oder zur äußeren Anschluss-Streuflanke 23a bleibt eine im Wesentlichen dreieckige Querverteilung der relative Streumenge RSM der Streuflanke 21a (siehe die Fig. 3A) erhalten.

Das Grenzstreubild 22 und das Anschluss-Streubild 23 sind an einen Abstand 24 zwischen der der Grenzfahrgasse 4 und der Anschluss-Fahrgasse 6 angepasst, der der Teilarbeitsbreite TAB1 bzw. TAB2 entspricht, im Beispiel etwa 65% der vorgegebenen Arbeitsbreite AB. Die teilarbeitsbreiten TAB1, TAB2 weichen vom Abstand 24 vorzugsweise nicht mehr als 10% ab.

Daraus resultiert am Schnittpunkt 25 der inneren Grenzstreuflanke 22a mit der äußeren Anschluss-Streuflanke 23a jeweils ein Wert 26 der relativen Streumengen RSM, so dass sich dort die Werte 26 der beiden Streuflanken 22a, 23a zu den Maximalwerten 27, 28 relativen Streumengen RSM des Grenzstreubilds 22 und des Anschluss-Streubilds 23 addieren. Daraus ergibt sich die gewünschte gleichmäßige Überlappung der Streubilder 22 und 23 zwischen Grenzfahrgasse 4 und Anschluss-Fahrgasse 6. Vorzugsweise wird eine Abweichung der Werte 26 in Summe von höchstens 20%, insbesondere von höchstens 10%, von den Maximalwerten 27, 28, oder gegebenenfalls von deren Mittelwert, zugelassen.

Demgegenüber zeigt die Fig. 3B zum Vergleich ein Überlappen herkömmlicher Streuflanken 21a, bei denen die relativen Streumengen RSM am gemeinsamen Schnittpunkt 25 jeweils einen deutlich höheren Wert 29 aufweisen. Beim Überlappen würde in der Summe der beiden Werte 29 eine Überdüngung zwischen Grenzfahrgasse 4 und Anschluss-Fahrgasse 6 verursacht.

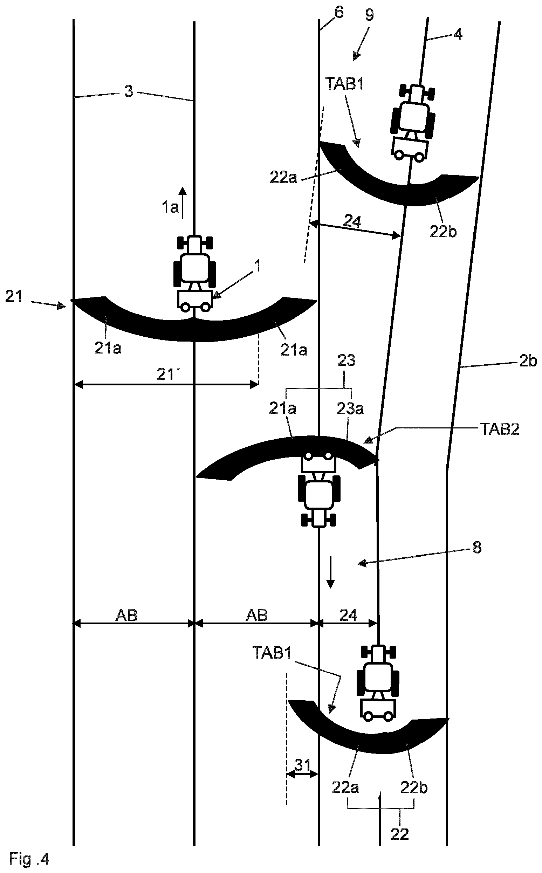

In Nachbarschaft von Anschluss-Fahrgassen 6 ist es somit vorteilhaft, die innere Teilarbeitsbreite TAB des Normalstreubilds 21 im Grenzstreubild 22 zu verändern, insbesondere zu reduzieren, also die innere Grenzstreuflanke 22a gegenüber der Streuflanke 21a in Querrichtung auf einen Wert TAB1 zu stauchen. Dies dient in erster Linie einer Anpassung an den tatsächlichen Abstand 24 zwischen der Grenzfahrgasse 4 und der Anschluss-Fahrgasse 6, siehe auch die Fig. 4. Eine Reduzierung von TAB1 ausgehend von der vorgegeben Arbeitsbreite AB bzw. der Teilarbeitsbreite TAB ist in jedem Fall möglich. Auch eine Erhöhung ist möglich, sofern die Arbeitsbreite AB in den Feldfahrgassen 3 nicht bereits maximiert wurde. Die innere Teilarbeitsbreite TAB1 der Grenzstreuflanke 22a kann zudem dynamisch angepasst werden.

Die Fig. 4 verdeutlicht die Anwendung des Grenzstreubilds 22 beim Befahren der Grenzfahrgasse 4 entlang der Anschluss-Fahrgasse 6. Demnach wird die Grenzfahrgasse 4 mit dem Grenzstreubild 22 umfassend die innere Grenzstreuflanke 22a und eine äußere Grenzstreuflanke 22b befahren. Die äußere Grenzstreuflanke 22b ist auf bekannte Weise mit einer trapezförmigen Querverteilung an den Abstand zur Feldgrenze 2b angepasst, um eine lokale Unterdüngung und einen Düngeraustrag über die Feldgrenze 2b hinaus möglichst zu vermeiden.

Die innere Grenzstreuflanke 22a ist unabhängig von der äußeren Grenzstreuflanke 22b gegenüber einer der beiden Streuflanken 21a des Normalstreubilds 21 verändert, beispielsweise durch Einstellen der inneren Teilarbeitsbreite TAB1, die vorzugsweise an den Verlauf der Anschluss-Fahrgasse 6 angepasst ist.

Beim normalen Befahren der abstandsgleichen Feldfahrgassen 3 wird der Normalstreufächer 18 und somit das Normalstreubild 21 verwendet. Zum besseren Verständnis ist ein Teilbereich 21' des Normalstreubilds 21 bezeichnet, der den in den Figuren 3A und 3B von -50% bis +100% der vorgegebenen Arbeitsbreite AB gezeigten Streuflanken 21a entspricht. Die Teilarbeitsbreiten TAB des Normalstreubilds 21 sind identisch und ergeben die vorgegebene Arbeitsbreite AB.

Beim Befahren der Anschluss-Fahrgasse 6 wird zur benachbarten Feldfahrgasse 3 hin eine Streuflanke 21a des Normalstreubilds 21 verwendet, zur benachbarten Grenzfahrgasse 4 hin die vom Normalstreubild 21 abweichende äußere Anschluss-Streuflanke 23a mit der Teilarbeitsbreite TAB2.

Die Anschlussfahrgasse 6 wird somit mit einem vorzugsweise asymmetrischen Anschluss-Streubild 23 befahren, dass sich aus einer zum Feldinneren 2a weisenden Streuflanke 21a des Normalstreubilds 21 und der vorzugsweise an den Ist-Abstand 24 zur Grenzfahrgasse 4 angepassten äußeren Anschluss-Streuflanke 23a zusammensetzt.

Die Düngerverteilung im Überlappungsbereich von Grenzfahrgasse 4 und Anschluss-Fahrgasse 6 ergibt sich dann aus der Überlappung der inneren Grenzstreuflanke 22a beim Befahren der Grenzfahrgasse 4 und der äußeren Anschluss-Streuflanke 23a beim Befahren der Anschlussfahrgasse 6, siehe obige Erläuterungen zur Fig. 3A.

Vorteilhaft ist hierbei der in der Fig.4 skizzierte Fall, bei dem die innere Teilarbeitsbreite TAB1 und die äußere Teilarbeitsbreite TAB2 dem Ist-Abstand 24 zwischen der Grenzfahrgasse 4 und der Anschluss-Fahrgasse 6 entsprechen. Hierbei können sowohl im Wesentlichen dreieckige Querverteilungen in der inneren Grenzstreuflanke 22a und/oder in der äußeren Anschluss-Streuflanke 23a kombiniert werden als auch erfindungsgemäß eine trapezförmig gegenüber dem Normalstreubild 21 verzerrte innere Grenzstreuflanke 41a und walweise äußere Anschluss-Streuflanke 23a. Beispielsweise könnte eine trapezförmige innere Grenzstreuflanke 41a im Ausnahmefall dazu verwendet werden, bei der Grenzfahrt mehr Dünger nach innen zu werfen, sodass die äußere Teilarbeitsbreite TAB2 der äußeren Anschluss-Streuflanke 23a beim Befahren der Anschluss-Fahrgasse 6 reduziert und ein größerer Abstand zwischen der äußeren Anschluss-Streuflanke 23a und der Feldgrenze 2b eingehalten werden kann. Folglich sinkt die Gefahr, dass von der Anschluss-Fahrgasse 6 aus über die Feldgrenze 2b hinaus gestreut wird.

Ebenso könnte die innere Teilarbeitsbreite TAB1 des Grenzstreubilds 22 im Ausnahmefall um einen Überstand 31 größer als der Ist-Abstand 24 zwischen der Grenzfahrgasse 4 und der Anschluss-Fahrgasse 6 eingestellt werden (nicht dargestellt), um mit der äußeren Anschluss-Streuflanke 23a einen größeren Abstand zur Feldgrenze 2b einzuhalten. Das heißt, die äußere Teilarbeitsbreite TAB2 der äußeren Anschluss-Streuflanke 23a würde dann entsprechend verkleinert werden und somit an die über den Abstand 24 hinaus verbreiterte innere Grenzstreuflanke 22a angepasst.

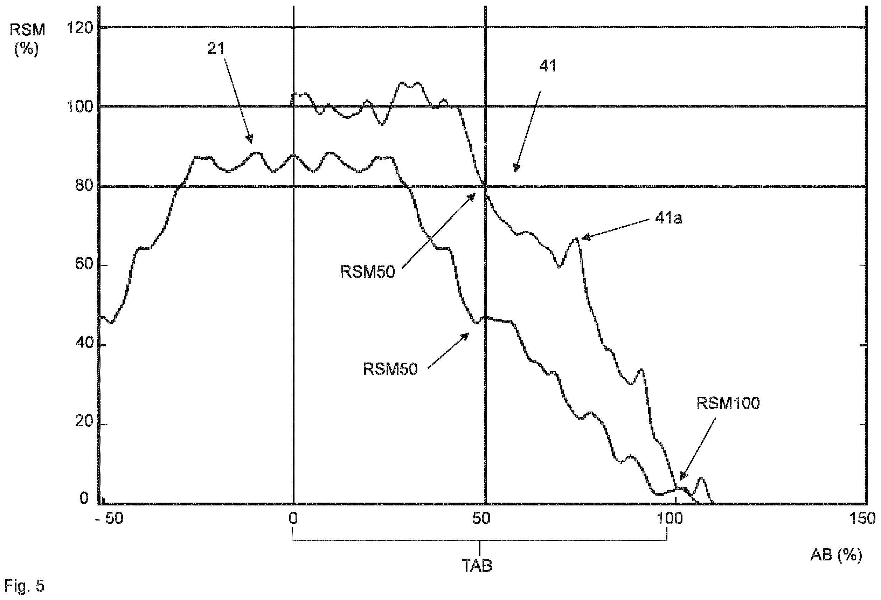

In der Fig. 5 ist ferner angedeutet, was unter einer erfindungsgemäß trapezförmigen Verzerrung der inneren Grenzstreuflanke zu verstehen ist. Demnach ändert sich die Querverteilung qualitativ durch Umverteilung der relativen Streumenge RSM in Querrichtung gegenüber dem Normalstreubild 21.

Die trapezförmige Verzerrung oder Umverteilung lässt sich in der Fig. 5A durch Vergleich der bei der Hälfte (50%) der vorgegebenen Arbeitsbreite AB jeweils ausgebrachten relativen Streumengen RSM50 erkennen. In der Streuflanke 21a des Normalstreubilds 21 beträgt die relative Streumenge RSM50 etwa 43%. In einer verzerrten inneren Grenzstreuflanke 41a eines alternativen Grenzstreubilds 41 beträgt die relative Streumenge RSM50 dagegen 80%.

Zum Erzeugen der inneren Grenzstreuflanke 41a kann die relative Streumenge RSM50 (bei halber vorgegebener Arbeitsbreite AB) beispielsweise um 20 bis 50% gegenüber dem Normalstreubild 21 erhöht werden.

Wie die Fig. 5 ferner erkennen lässt, ändert sich eine relative Streumenge RSM100 bei 100% der vorgegebenen Arbeitsbreite AB in der Grenzstreuflanke 41a nur unwesentlich oder gar nicht gegenüber dem entsprechenden Wert im Normalstreubild 21. Das heißt, die innere Teilarbeitsbreite der Grenzstreuflanke 41a entspricht der Teilarbeitsbreite TAB des Normalstreubilds 21.

Die obigen Anpassungen können im Bereich der Keilfahrspur 9 dynamisch vorgenommen werden. Beispielsweise kann die innere Teilarbeitsbreite TAB1 in der Regel bis zu einem Maximalwert entsprechend der inneren Teilarbeitsbreite TAB, also der Hälfte der vorgegebenen Arbeitsbreite AB, vergrößert werden.

Je nach Anwendungsfall ermöglicht die Anpassung der inneren Teilarbeitsbereite TAB1 und der Querverteilung der inneren Grenzstreuflanke 22a eine flexible Optimierung des Düngeraustrags im Bereich von Parallelfahrspuren 8 und Keilfahrspuren 9 für unterschiedliche und/oder schwankende Ist-Abstände 24 zur Grenzfahrspur 4.

Durch eine Variation der inneren Teilarbeitsbreite TAB1 kann die innere Grenzstreuflanke 22a bei der Grenzfahrt laufend an den Ist-Abstand 24 zur benachbarten Anschluss-Fahrspur 6 und/oder deren Richtung angepasst werden. Zusätzlich ist eine entsprechende Variation der Düngerdosierung möglich.

Durch eine Variation der inneren Teilarbeitsbreite TAB2 kann ferner die äußere Anschluss-Streuflanke 23a beim Befahren der Anschluss-Fahrspur 6 laufend an den Abstand 24 und/oder die Richtung der Grenzfahrgasse 4 angepasst werden. Zusätzlich ist eine entsprechende Variation der Düngerdosierung möglich. Erfindungsgemäß kann wie folgt gearbeitet werden:
Die Grenzfahrt um das Feld 2 wird vorzugsweise, jedoch nicht zwingend, zu Beginn des Düngeraustrags vorgenommen.

In Bereichen, in denen die Grenzfahrgasse 4 im regelmäßigen Abstand entsprechend der vorgegebenen Arbeitsbreite AB entlang einer Feldfahrgasse 3 verläuft, kann eine Streuflanke 21a des Normalstreubilds 21 als innere Grenzstreuflanke verwendet werden.

Ansonsten wird vorzugsweise mit einem Grenzstreubild 22 umfassend eine an benachbarte Vorgewende 5 oder eine Anschlussfahrgasse 6 angepasste innere Grenzstreuflanke 22a und eine herkömmliche äußere Grenzstreuflanke 22b gearbeitet.

Bei der Grenzfahrt entlang der Anschluss-Fahrgasse 6 mit kleinerem Abstand 24 als die Arbeitsbreite AB, also beispielsweise entlang einer entsprechenden Parallelfahrspur 8 oder Keilfahrspur 9, kann eine ausgehend von der Teilarbeitsbreite TAB gestauchte Streuflanke des Normalstreubilds 21 als innere Grenzstreuflanke 22a verwendet werden, erfindungsgemäß eine trapezförmig gegenüber dem Normalstreubild 21 verzerrte Grenzstreuflanke 41a.

Eine Anpassung der Grenzstreuflanke 22a an den Ist-Abstand 24 kann beispielsweise mittels GPS-Ortung des Schleuderstreuers 1 im Vergleich mit zuvor gespeicherten GPS-Ortsdaten laufend erfolgen.

Beim Befahren der Anschluss-Fahrgasse 6 kann entsprechend mit einer an den Abstand 24 und/oder die innere Grenzstreuflanke 22a gegebenenfalls dynamisch angepassten äußeren Anschluss-Streuflanke 23a gearbeitet werden.

Der Wechsel zwischen den jeweils angewendeten Streubildern, insbesondere die Aktivierung und Deaktivierung der inneren Grenzstreuflanke 22a und der äußeren Anschluss-Streuflanke 23a erfolgt vorzugsweise automatisch durch GPS-Steuerung mittels des GPS-System 16. Hierzu werden geeignete Positionsdaten des Felds 2 auf bekannte Weise vorgehalten und mit Ist-Positionsdaten des Schleuderstreuers 1 bzw. des zugehörigen Schleppers 15 verglichen.

Mittels des Bordcomputers 17 kann dann die jeweils dem Feldinneren 2a bzw. dem Vorgewende 5 zugewandte Streuscheibeneinheit 11 gezielt angesteuert werden, um die innere Grenzstreuflanke 22a oder die äußere Anschluss-Streuflanke 23a einzustellen. Dies erfolgt beispielsweise durch Verstellen des Aufgabepunkts 13a am zugehörigen Einleitsystem 13. Zusätzlich können Drehzahl 12a und Dosierung des Düngers angepasst werden, gegebenenfalls auch gemeinsam mit der der äußeren Grenzstreuflanke 22b bzw. der jeweils inneren Anschluss-Streuflanke zugeordneten Streuscheibeneinheit 11.

## Patentansprüche

1. Verfahren zum Ausbringen von Dünger mit einem Schleuderstreuer (1), wobei beim normalen Befahren von Feldfahrgassen (3) im Feldinneren (2a) mit einem Normalstreubild (21) einer vorgegebenen Arbeitsbreite (AB), beim Befahren einer Grenzfahrgasse (4) mit einem Grenzstreubild (22) und beim Befahren einer dazwischen liegenden und an der Grenzfahrgasse entlang laufenden Anschluss-Fahrgasse (6) mit einem Anschluss-Streubild (23) gearbeitet wird, wobei beim Befahren der Grenzfahrgasse (4) mit einer das Anschluss-Streubild (23) überlappenden inneren Grenzstreuflanke (22a, 41a) gearbeitet wird, deren innere Teilarbeitsbreite (TAB1) und/oder relative Querverteilung vom Normalstreubild (21) abweicht, **dadurch gekennzeichnet, dass** eine Streuflanke (21a) des Normalstreubilds (21) zum Erzeugen der inneren Grenzstreuflanke (41a) trapezförmig verzerrt wird.

2. Verfahren nach Anspruch 1, wobei bei einem Abstand (24) zwischen Grenzfahrgasse (4) und Anschluss-Fahrgasse (6) gearbeitet wird, der kleiner ist als die vorgegebene Arbeitsbreite (AB).

3. Verfahren nach Anspruch 1 oder 2, wobei die Teilarbeitsbreiten (TAB1, TAB2) einander überlappender Streuflanken (22a, 23a) des Grenzstreubilds (22) und des Anschluss-Streubilds (23) abhängig von einem Abstand (24) zwischen Grenzfahrgasse (4) und Anschluss-Fahrgasse (6) gegenüber dem Normalstreubild (21) reduziert werden.

4. Verfahren nach einem der vorigen Ansprüche, wobei Werte (26) der relativen Streumenge (RSM) in der aus dem Befahren resultierenden Querverteilung an einem Schnittpunkt (25) der inneren Grenzstreuflanke (22a) mit der äußeren Anschluss-Streuflanke (23a) in Summe von Maximalwerten (27, 28) der relativen Streumengen RSM des Grenzstreubilds (22) und des Anschluss-Streubilds (23) um nicht mehr als 20% abweichen, insbesondere um nicht mehr als 10%.

5. Verfahren nach einem der vorigen Ansprüche, wobei die Teilarbeitsbreite (TAB1) der inneren Grenzstreuflanke (22a) vom Abstand (24) zwischen Grenzfahrgasse (4) und Anschluss-Fahrgasse (6) um nicht mehr als 10% abweicht.

6. Verfahren nach wenigstens einem der vorigen Ansprüche, wobei die innere Grenzstreuflanke (22a) beim Befahrenen der Grenzfahrgasse (4) laufend an den Abstand (24) zur Anschluss-Fahrgasse (6) angepasst wird, wobei diese insbesondere in Form einer Keilfahrspur (9) entlang der Grenzfahrgasse (4) verläuft.

7. Verfahren nach wenigstens einem der vorigen Ansprüche, wobei ein Aufgabepunkt (13a) für den Dünger auf einer der inneren Grenzstreuflanke (22a) zugeordneten Streuscheibe, (12) ausgehend vom normalen Befahren der Feldfahrgassen (3), zum Erzeugen der inneren Grenzstreuflanke (22a) entgegen der Drehrichtung der Streuscheibe (12) verstellt wird.

8. Verfahren nach wenigstens einem der vorigen Ansprüche, wobei die Drehzahl (12a) einer der inneren Grenzstreuflanke (22a) zugeordneten Streuscheibe (12), ausgehend vom normalen Befahren der Feldfahrgassen (3), zum Erzeugen der inneren Grenzstreuflanke (22a) reduziert wird.

9. Verfahren nach wenigstens einem der vorigen Ansprüche, wobei die Dosierung des Düngers an einer der inneren Grenzstreuflanke (22a) zugeordneten Streuscheibe (12), ausgehend vom normalen Befahren der Feldfahrgassen (3), zum Erzeugen der inneren Grenzstreuflanke (22a) reduziert wird.

10. Verfahren nach wenigstens einem der vorigen Ansprüche, wobei wenigstens eine Streuschaufel (12b) an einer der inneren Grenzstreuflanke (22a) zugeordneten Streuscheibe (12), ausgehend vom normalen Befahren der Feldfahrgassen (3), zum Erzeugen der inneren Grenzstreuflanke (22a) verstellt oder selektiv zugeschaltet wird.

11. Verfahren nach wenigstens einem der vorigen Ansprüche, wobei das Grenzstreubild (22) und das Anschlussstreubild (23) automatisch mittels GPS-Steuerung aktiviert und/oder eingestellt werden.

12. Schleuderstreuer (1) für Dünger mit zwei mittels eines Bordcomputers (17) getrennt einstellbaren Schleuderscheibeneinheiten (11), und mit einem GPS-System (16), wobei mittels des Bordcomputers (17) wenigstens ein erster Betriebszustand zum Erzeugen eines Normalstreubilds (21) für normales Befahren innerer Feldfahrgassen (3), ein zweiter Betriebszustand zum Erzeugen eines Grenzstreubilds (22) für das Befahren einer Grenzfahrgasse (4) und ein dritter Betriebszustand zum Erzeugen eines Anschluss-Streubilds (23) für das Befahren einer der Grenzfahrgasse (4) benachbarten Anschluss-Fahrgasse (6) aktiviert werden können, und wobei der Bordcomputer (17) ausgebildet ist, anhand empfangener GPS-Daten das Grenzstreubild (22) durch Ansteuern einer dabei dem Feldinneren (2a) zugewandten Schleuderscheibeneinheit (11), und insbesondere ferner das Anschluss-Streubild (23) durch Ansteuern einer dabei der Feldgrenze (2b) zugewandten Schleuderscheibeneinheit (11), gemäß dem Verfahren nach wenigstens einem der vorigen Ansprüche einzustellen.

13. Schleuderstreuer nach Anspruch 12, wobei die Schleuderscheibeneinheiten (11) Schleuderscheiben (12) und Einleitsysteme (13) für Dünger umfassen, die mit dem Bordcomputer (17) zum Einstellen von Streuschaufeln (12b), Aufgabepunkten (13a), Drehzahlen (12a) und/oder Dosierungen des Düngers gemäß dem Verfahren nach wenigstens einem der Ansprüche 7 bis 10 verbunden sind.

## Claims

1. Method for distributing fertilizer with a centrifugal spreader (1), wherein, when normally passing over field tramlines (3) in the field interior (2a), a normal spreading pattern (21) of a predetermined working width (AB) is used, when passing over a border tramline (4) a border spreading pattern (22) is used, and when passing over a connecting tramline (6) which lies in between and runs along the border tramline, a connecting spreading pattern (23) is used, wherein, when passing over the border tramline (4), use is made of an inner border spreading flank (22a, 41a) which overlaps the connecting spreading pattern (23) and the inner partial working width (TAB1) and/or relative transverse distribution of which differs from the normal spreading pattern (21), **characterized in that** a spreading flank (21a) of the normal spreading pattern (21) is distorted trapezoidally in order to produce the inner border spreading flank (41a).

2. Method according to Claim 1, wherein use is made in the case of a distance (24) between the border tramline (4) and connecting tramline (6) that is smaller than the predetermined working width (AB).

3. Method according to Claim 1 or 2, wherein the partial working width (TAB1, TAB2) of mutually overlapping spreading flanks (22a, 23a) of the border spreading pattern (22) and of the connecting spreading pattern (23) are reduced in relation to the normal spreading pattern (21) depending on a distance (24) between the border tramline (4) and the connecting tramline (6).

4. Method according to one of the preceding claims, wherein values (26) of the relative spreading quantity (RSM) in the transverse distribution, resulting from the passing over, at an intersecting point (25) of the inner border spreading flank (22a) with the outer connecting spreading flank (23a) do not differ by more than 20%, in particular by more than 10%, in total from maximum values (27, 28) of the relative spreading amounts (RSM) of the border spreading pattern (22) and of the connecting spreading pattern (23).

5. Method according to one of the preceding claims, wherein the partial working width (TAB1) of the inner border spreading flank (22a) does not differ by more than 10% from the distance (24) between the border tramline (4) and the connecting tramline (6).

6. Method according to at least one of the preceding claims, wherein, when passing over the border tramline (4), the inner border spreading flank (22a) is continuously adapted to the distance (24) from the connecting tramline (6), wherein the latter runs in particular in the form of a V-shaped lane (9) along the border tramline (4).

7. Method according to at least one of the preceding claims, wherein a feed point (13a) for the fertilizer to a spreading disc (12), which is assigned to the inner border spreading flank (22a), is adjusted, from normally passing over the field tramlines (3), for producing the inner border spreading flank (22a) counter to the direction of rotation of the spreading disc (12).

8. Method according to at least one of the preceding claims, wherein the rotational speed (12a) of a spreading disc (12), which is assigned to the inner border spreading flank (22a), is reduced, from normally passing over the field tramlines (3), in order to produce the inner border spreading flank (22a).

9. Method according to at least one of the preceding claims, wherein the metering of the fertilizer to a spreading disc (12), which is assigned to the inner border spreading flank (22a), is reduced, from normally passing over the field tramlines (3), in order to produce the inner border spreading flank (22a).

10. Method according to at least one of the preceding claims, wherein at least one spreading blade (12b) on a spreading disc (12), which is assigned to the inner border spreading flank (22a), is adjusted or selectively switched on, from normally passing over the field tramlines (3), in order to produce the inner border spreading flank (22a).

11. Method according to at least one of the preceding claims, wherein the border spreading pattern (22) and the connecting spreading pattern (23) are activated and/or adjusted automatically by means of GPS control.

12. Centrifugal spreader (1) for fertilizer, comprising two centrifugal disc units (11) which are adjustable separately by means of an on-board computer (17), and comprising a GPS system (16), wherein at least a first operating state for producing a normal spreading pattern (21) for normally passing over inner field tramlines (3), a second operating state for producing a border spreading pattern (22) for passing over a border tramline (4), and a third operating state for producing a connecting spreading pattern (23) for passing over a connecting tramline (6) adjacent to the border tramline (4) can be activated by means of the on-board computer (17), and wherein the on-board computer (17) is designed in order, on the basis of GPS data received, to adjust the border spreading pattern (22) by activating a centrifugal disc unit (11) facing the field interior (2a), and in particular furthermore to adjust the connecting spreading pattern (23) by activating a centrifugal disc unit (11) facing the field border (2b), according to the method according to at least one of the preceding claims.

13. Centrifugal spreader according to Claim 12, wherein the centrifugal disc units (11) comprise centrifugal discs (12) and introducing systems (13) for fertilizer, which are connected to the on-board computer (17) for adjusting spreading blades (12b), feed points (13a), rotational speeds (12a) and/or metering of the fertilizer according to the method according to at least one of Claims 7 to 10.

## Revendications

1. Procédé d'épandage d'engrais à l'aide d'un épandeur centrifuge (1), sachant qu'en situation de passage normal dans les couloirs du champ (3) à l'intérieur du champ (2a), on travaille avec une image d'épandage normal (21) d'une largeur de travail (AB) prédéfinie, qu'en situation de passage dans un couloir en limite (4), on travaille avec une image d'épandage en limite (22) et qu'en situation de passage dans un couloir de jonction (6) situé entre et s'étendant le long du couloir en limite on travaille avec une image d'épandage de jonction (23), sachant qu'en situation de passage dans le couloir en limite (4), on travaille avec un côté d'épandage en limite (22a, 41a) intérieur chevauchant l'image d'épandage de jonction (23) dont la largeur de travail partielle (TAB1) intérieure et/ou la répartition transversale relative s'écarte de l'image d'épandage normal (21), **caractérisé en ce qu'**un côté d'épandage (21a) de l'image d'épandage normal (21) est biaisé en forme de trapèze pour réaliser le côté d'épandage en limite (41a) intérieur.

2. Procédé selon la revendication 1, sachant qu'on travaille à une certaine distance (24), entre le couloir en limite (4) et le couloir de jonction (6), inférieure à la largeur de travail (AB) prédéfinie.

3. Procédé selon la revendication 1 ou 2, les largeurs de travail partielles (TAB1, TAB2) des côtés d'épandage (22a, 23a) de l'image d'épandage en limite (22) et de l'image d'épandage de jonction (23) se chevauchant étant réduites par rapport à l'image d'épandage normal (21) en fonction d'une distance (24) entre le couloir en limite (4) et le couloir de jonction (6).

4. Procédé selon l'une quelconque des revendications précédentes, les valeurs (26) de la quantité d'épandage relative (RSM) ne s'écartant pas de plus de 20 %, notamment pas de plus de 10 %, dans la répartition transversale résultant du passage au niveau d'un point d'intersection (25) du côté d'épandage en limite (22a) intérieur d'avec le côté d'épandage de jonction (23a) extérieur de la somme des valeurs maximales (27, 28) des quantités d'épandage relatives RSM de l'image d'épandage en limite (22) et de l'image d'épandage de jonction (23).

5. Procédé selon l'une quelconque des revendications précédentes, la largeur de travail partielle (TAB1) du côté d'épandage en limite (22a) intérieur ne s'écartant pas de plus de 10 % de la distance (24) entre le couloir en limite (4) et le couloir de jonction (6).

6. Procédé selon au moins l'une quelconque des revendications précédentes, le côté d'épandage en limite (22a) intérieur étant adapté en situation de passage dans le couloir en limite (4) passant à la distance (24) du couloir de jonction (6), ce couloir s'étendant notamment sous la forme d'une voie de circulation en coin (9) le long du couloir en limite (4).

7. Procédé selon au moins l'une quelconque des revendications précédentes, un point de distribution (13a) pour l'engrais sur un disque d'épandage (12) associé au côté d'épandage en limite (22a) intérieur pouvant être réglé à l'encontre de la direction de rotation du disque d'épandage (12) en partant du passage normal dans les couloirs du champ (3) pour réaliser le côté d'épandage en limite (22a) intérieur.

8. Procédé selon au moins l'une quelconque des revendications précédentes, la vitesse de rotation (12a) d'un disque d'épandage (12) associé au côté d'épandage en limite (22a) intérieur étant réalisé en partant du passage normal dans les couloirs du champ (3) pour réaliser le côté d'épandage en limite (22a) intérieur.

9. Procédé selon au moins l'une quelconque des revendications précédentes, le dosage de l'engrais étant réduit au niveau d'un disque d'épandage (12) associé au côté d'épandage en limite (22a) intérieur en partant du passage normal dans les couloirs du champ (3) pour réaliser le côté d'épandage en limite (22a) intérieur.

10. Procédé selon au moins l'une quelconque des revendications précédentes, au moins une pelle d'épandage (12b) étant connectée de façon réglable ou sélective au niveau d'un disque d'épandage (12) associé au côté d'épandage en limite (22a) intérieur en partant du passage normal dans les couloirs du champ (3) pour réaliser le côté d'épandage en limite (22a) intérieur.

11. Procédé selon au moins l'une quelconque des revendications précédentes, l'image d'épandage en limite (22) et l'image d'épandage de jonction (23) étant réglées et/ou activées automatiquement par commande par GPS.

12. Épandeur centrifuge (1) pour engrais avec deux unités de disque d'épandage (11) réglables séparément à l'aide d'un ordinateur de bord (17) et avec un système GPS (16), au moins un premier état de fonctionnement pouvant être activé à l'aide de l'ordinateur de bord (17) pour produire une image d'épandage normal (21) pour le passage normal dans des couloirs intérieurs du champ (3), un deuxième état de fonctionnement pouvant être activé pour produire une image d'épandage en limite (22) pour le passage dans un couloir en limite (4) et un troisième état de fonctionnement pouvant être activé pour produire une image d'épandage de jonction (23) pour le passage dans un couloir de jonction (6) connexe au couloir en limite (4) et l'ordinateur de bord (17) étant conçu pour régler l'image d'épandage en limite (22) à l'aide des données GPS reçues en commandant une unité de disque d'épandage (11) orientée vers l'intérieur du champ (2a) et notamment en outre l'image d'épandage de jonction (23) en commandant une unité de disque d'épandage (11) orientée vers la limite de champ (2b), selon le procédé selon au moins l'une quelconque des revendications précédentes.

13. Épandeur centrifuge selon la revendication 12, les unités de disque d'épandage (11) comprenant des disques d'épandage (12) et des systèmes de déclenchement (13) pour l'engrais, ceux-ci étant reliés à l'ordinateur de bord (17) pour régler les pelles d'épandage (12b), les points de distribution (13a), les vitesses de rotation (12a) et/ou les dosages de l'engrais selon le procédé selon au moins l'une quelconque des revendications 7 à 10.
